(19) Europäisches Patentamt
European Patent Office
Office européen des brevets

(11) **EP 3 010 172 A1**

(12) **EUROPEAN PATENT APPLICATION**

(43) Date of publication:
**20.04.2016 Bulletin 2016/16**

(51) Int Cl.:
***H04L 9/00*** (2006.01)

(21) Application number: **14189234.9**

(22) Date of filing: **16.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alpen-Adria-Universität Klagenfurt**
**9020 Klagenfurt am Wörthersee (AT)**

(72) Inventors:
• **Rass, Stefan**
**9170 Ferlach (AT)**

• **Schartner, Peter**
**9020 Klagenfurt (AT)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

Remarks:
Amended claims in accordance with Rule 137(2) EPC.

(54) **SYSTEM ENABLING LICENSED PROCESSING OF ENCRYPTED INFORMATION**

(57) A first entity of a system , the system comprising at least the first entity, an execution entity and a licensing/encoding protocol, wherein the first entity comprises a data memory, having stored thereon data to be processed, wherein the execution entity comprises a program memory, having stored thereon a program code, and is configured for data processing using the program code, wherein the first entity is configured to encode the data by a first key provided by the licensing/encoding protocol to obtain encoded data and to submit the encoded data to the execution entity, and wherein the program code of the execution entity is adapted by a second key, provided by the licensing/encoding protocol and associated to the first key, such that, when executing the adapted program code on the execution entity, the encoded data is processed.

FIG 1

EP 3 010 172 A1

**Description**

Embodiments of the invention refer to a first entity of the system, an execution entity of the system, and a licensing/encoding protocol of the system, wherein the system comprises the first entity, the execution entity and the licensing/encoding protocol, and enables licensed processing of encrypted information. Further embodiments refer to the corresponding methods and computer programs.

Cloud computing is an evolving technology, offering new services like external storage or scalable data processing power. Up to now, most cases of data processing, such as statistical computations on medical data or other person-related information, are subject to the most stringent privacy requirements, making it difficult to have third parties processes.

A classical technique to prevent unauthorized parties from reading confidential information is by use of encryption. Unfortunately, this usually also prevents any form of processing.

Therefore, it is an objective of the present invention to enable an encryption/encoding scheme or encryption/encoding concept that allows permitted parties to process encrypted/coded data without ever gaining access to the underlying content.

This objective is solved by the subject matter of the independent claims.

An embodiment belonging to the first aspect provides a first entity of a system which comprises at least a first entity, an execution entity and a licensing/encoding protocol (for example executed at a licensing entity). The first entity (e.g. a client machine) comprises a data memory, having stored thereon data to be processed. The execution entity (e.g. an execution server) comprises a program memory, having stored thereon a program code, and is configured for data processing using the program code. The first entity is configured to encode the data by a first key provided by the licensing/encoding protocol to obtain encoded data and to submit the encoded data to the execution entity. The program code of the execution entity is adapted by a second key, provided by the licensing/encoding protocol and associated to the first key, such that, when executing the adapted program code on the execution entity, the encoded data is processed.

An embodiment according to a second aspect provides the corresponding execution entity of the system.

An embodiment according to a third aspect provides the corresponding licensing/encoding protocol within the system.

An embodiment according to the fourth aspect provides the system itself comprising the first entity, the execution entity and the licensing/encoding protocol, wherein the three entities may be connected to each other via a network, or wherein the first entity and the execution entity are housed together and connected to a licensing/encoding protocol via the network, or wherein the execution entity and the licensing/encoding protocol are housed together and connected to the first entity using the network.

Teachings disclosed herein refer to a mechanism to bind the ability of data processing to a licensing scheme. This mechanism is based on a principle where a program code, e.g. running on a cloud server, is enabled due to a key, provided by an external entity, to process data from a further entity, for example from a client, which is encoded by a corresponding key, also provided by the external entity. Here, the execution entity executes the program code on encrypted data such that the data is processed without decryption. This endows users with the ability to keep their personal data under their own control, with data processing being enabled only with explicit permission. Moreover, unlike classical access control techniques, the scheme never works on plaintext information and as such cannot be circumvented or deactivated by standard hacking techniques.

The teachings discussed above may be used for different applications. According to a further embodiment, the first entity is a client machine comprising sensitive data to be processed, wherein the execution entity is an execution, like a cloud server, comprising the program code of at least one application which is connected to the client machine via a network, wherein the licensing/encoding protocol runs at a further server and is also connected to the client machine and the execution server via a network. This application enables to perform cloud computer for sensitive data.

According to a further embodiment, the first entity is a smart metering sensor outputting sensitive data (e.g. regarding an energy consumption), wherein the execution entity is a data processor to process two or more data packets from two or more smart metering sensors to be processed (wherein, for example, processing means combining the two or more data packets to output a common data packet). Here, it is advantageous that a plurality of data, e.g. from a plurality of smart metering sensors, may be processed without getting access to the content of the data. Here, processing may be understood in terms of combining or comparing such that an analysis of the entire data is possible.

According to a further embodiment, the program code is a firmware of an electronic control unit to be executed by the execution entity. The firmware is coded using a (second) key corresponding to a license for the firmware. The first entity comprises a plurality of data sources (e.g. from a plurality of sensors), wherein a data output by the data sources to the execution entity of the electronic control unit (e.g. via a data interface of the electronic control unit) is encoded using the first key which may depend on an identification number of the electrical control unit. This application enables that a firmware is just executable on the corresponding electronic control unit for (sensor) data processing when a corresponding license is available, i.e. in case the license key fits to the key used for encoding the data.

A further embodiment provides methods for processing data using the above described systems, wherein a first method refers to the steps performed by the first entity, a second method refers to the steps performed by the execution entity and a third method refers to the steps performed by the licensing/encoding protocol.

Further embodiments refer to a computer program performing one of the above methods.

Embodiments of the present invention will be subsequently discussed referring to the enclosed figures, wherein:

Fig. 1          shows an exemplary block diagram of a system comprising the first entity, the execution entity and the program/licensing protocol according to the main aspects;

Fig. 2a         is a schematic block diagram of a licensing scenario involving the three separate parties;

Fig. 2b         shows a schematic block diagram of a licensing scenario when two of the three parties are housed together;

Fig. 3a         shows a schematic block diagram illustrating the concept of a blind Turing-machine used for the embodiments;

Figs. 3b, 3c    show further illustrations for explaining the principle of blind Turing-machines;

Fig. 4a         shows a schematic block diagram of an application of the system shown by Fig. 1 in fields of cloud computing or distributed computing;

Fig. 4b         shows a schematic block diagram of an application of the system shown by Fig. 1 in fields of smart metering; and

Fig. 4c         shows the schematic block diagram of an application of the system shown by Fig. 1 in fields of electronic control units.

Below, embodiments of the present invention will be discussed in detail, wherein it should be noted that identical reference numerals are provided to objects having identical or similar functions, so that the description thereof is mutually applicable and interchangeable.

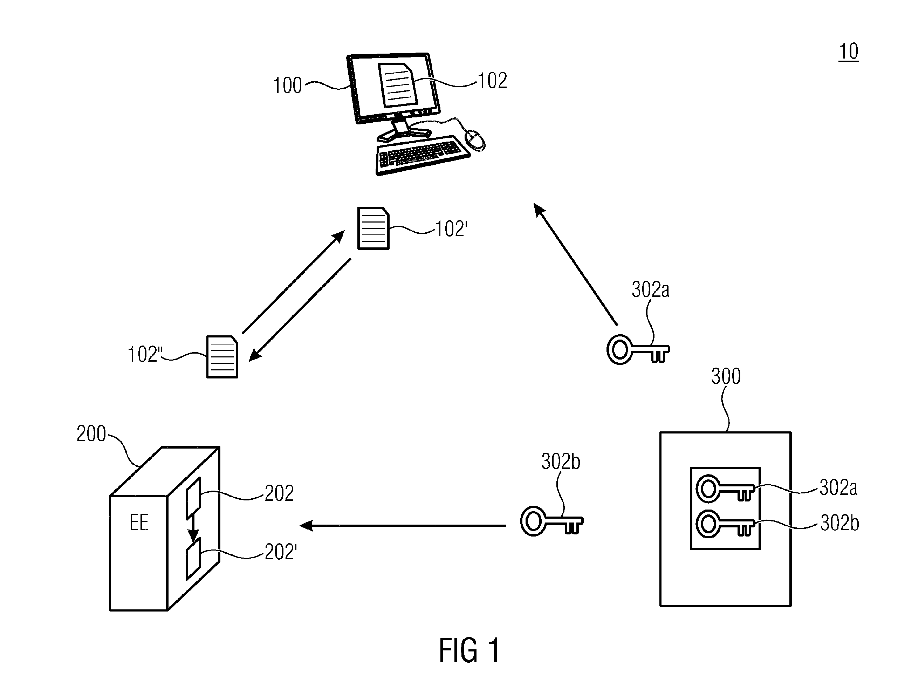

Fig. 1 shows a system 10 comprising a first entity 100, e.g. a client computer, an execution entity 200, e.g. a server which may be spaced apart from a client computer 100, and a licensing/encoding protocol 300 which may run on a further computing entity, for example on a server of the software vendor.

The first entity 100 comprises a data memory having stored thereon data 102, e.g. personal data like medical data or other person-related data, to be processed externally by the execution entity 200. Therefore, the execution entity 200 comprises a program memory, having stored thereon a program code which enables, when running on the entity 200, e.g. by use of a CPU, to process the data of the first entity 100. However, the data 102 are encoded by the first entity 100 using a key 302a in order to avoid that the data 102 can be read when transmitting the data 102 from the first entity 100 to the execution entity 200 or by the execution entity 200 itself. The encoded and/or encrypted data, which is transferred from the first entity to the execution entity 200, is marked by the reference numeral 102'. The key 302a or secret 302a used for encoding the data 102 to obtain the encoded data 102' is provided by the third entity 300 having implemented the licensing/encoding protocol. The licensing/encoding protocol does not have to be implemented as a separate physical entity, it may also be implemented as a shared unit, i.e. in the first entity 100 and/or in the execution entity 200, as will be discussed below.

In parallel to the providing of the key 302a, a second key 302b assigned to the first key 302a, is provided by the entity 300 to the execution entity 200. This second key 302b enables the execution entity 200 or, in more detail, the program code 202 to process the data 102' encoded using the key 302a. In detail, the program code 202 is adapted by the key 302b to obtain the program code 202' enabling the processing of the decoded data 102'. Vice versa, the execution entity 200 cannot process data of another since the program code 202' is adapted for data code by the key 302a. It should furthermore be noted that the program code 202 may be provided by the software vendor as an adapted version 202' or as a version 202 to be adapted within the execution entity 200 based on the key 302b.

Note that the processing of the encoded data 102' by using the program code 202' may be performed without decoding, so that neither the execution entity 200 nor another entity is enabled to read the data 102' without the key 302a. Further the execution entity 200 cannot read the data 102' since the execution entity 200 does not know the key 302a used for encode the data 102 or in some embodiments the key 302b used for adapting (encrypting) the program code 202'.

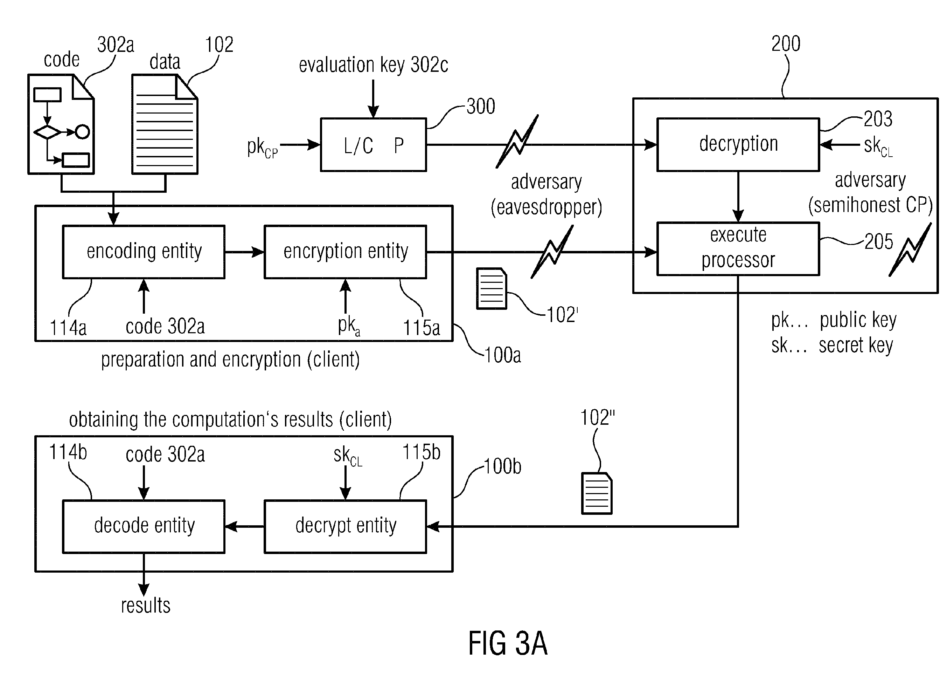

Here, it should be noted that the mechanism enabling the processing of the coded data is leaned against the construction of blind Turing-machines. Such a blind Turing-machine is a synonym for a hypothetically assumed process having three operations and enabling date processing while hiding the content of the data. The three basic operations are: head movement (trivial even on encrypted types), tape manipulations (doable with group homomorphic encryption) and state transitions (doable with ciphertexts comparison). Here, it is easy to introduce a generic extension to conventional encryption systems using the concept of public key and secret key. The construction of blind Turing-machines will be discussed in detail referring to Figs. 3a to 3c.

After processing the encoded data 102' within execution entity 200 using the adapted program code 202' the execution entity 200 retransmits the processed and still encoded data 102" to the first entity 100. The first entity 100 can now decode and/or decrypt the processed data 102" using the key 302a to obtain the decoded and processed data.

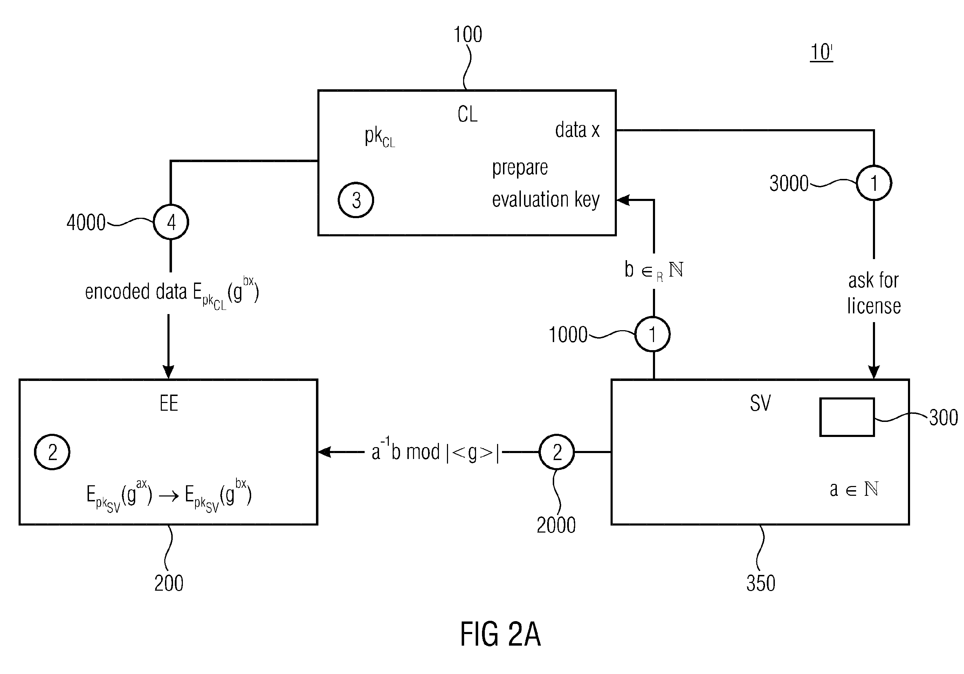

Fig. 2a shows a system 10' comprising the three entities client 100 (CL), software vendor 350 (SV) executing or using the protocol 300 and execution environment 200 (EE). Thus, the structure of the system 10' substantially complies with the system 10 of Fig. 1. Below, the functionality of the system 10', especially with focus on the encoding, will be discussed.

The concrete implementation of 10' using conventional assembler code will be discussed below, wherein it is evident that a program can only be executed if the code and the data obey the same encoding. $x \in$ N is a symbol to be processed. Let g be an element of a finite group that generates a (sub)group $\langle g \rangle$ whose order is $|\langle g \rangle|$. To avoid discovery of x by brute force (encryption and comparison), a $\mathrm{secret}\, a \in \mathbb{N}$ is chosen and is encoded x via the commitment

$$x \longmapsto g^{ax}.$$

As a technical condition, it is required gcd(a,$|\langle g \rangle|$1) = 1.

If *a* is known then it is easy to switch to another encoding based on b, via raising above formula to the power of $a^{-1}b$, where $a^{-1}$ is computed modulo $|\langle g \rangle|$(this inverse exists, as it is assumed relatively prime to the group order$|\langle g \rangle|$). This gives

$$(g^{ax})^{a^{-1}b} = g^{axa^{-1}b} = g^{bx}.$$

If a given encoding of one entity (e.g., the software vendor) shall be changed to a chosen encoding of another entity (e.g. the client), then the following interactive scheme can be used to switch from encoding *a* to encoding b, while revealing neither value to the other party. The protocol is as follows, where entity A secretly knows the encoding *a*, which shall be changed into the encoding b that entity B secretly chose. Common knowledge of both parties is all system parameters, in particular the generator *g* and group structure are known to both parties *A* and B.

1. A $\rightarrow$ B: an encoded item $g^{ax}$;

2. B $\rightarrow$ A: choose a secret b and raise $g^{ax}$ to b, and return the value $(g^{ax})^b = g^{abx}$; and

3. *A*: strip a from the exponent via $(g^{axb})^{a-1} = g^{bx}$. *A* can continue to work with the new encoding b, which is in turn unknown to *A*.

Note that the knowledge of A is x, a, $g^x$, $g^{ax}$ and g$^{abx}$, from which b cannot be extracted efficiently. This basic functionality of the embodiment described in context of Fig. 1 can be enhanced to an embodiment having encryption means.

Here, the single symbol x is encrypted via a commitment with encoding, i.e., the raw data or code item takes the form

$$E_{pk}(g^{ax}),$$

where $E_{pk}$ denotes a multiplicatively homomorphic encryption under the public key *pk,* and *a* is the encoding of x towards security against brute force disclosure.

Starting from this teaching, it is supposed that a program P written by the software vendor 350 receives within the execution entity 200 under an encoding $a$ (unknown to the execution entity 200). Further, it is assumed that the program P is encrypted under the public key $pk_{SV}$ of the software vendor 350 for reasons of intellectual property protection and to effectively prevent an execution without explicit permission by the software vendor 350. To obtain a license (permission) and execute the program, the following steps are taken:

1. The client 100 obtains a license from the software vendor 350, which is merely an encoding b that is sent from the software vendor 350 to the client 100 over an encrypted channel (step 1000);

2. The software vendor 350 chooses a secret value $b \in N$ and sends the quantity $a^{-1}b$ mod $|{<}g{>}|$ to the execution entity 200, which it can use to "personalize" the program P by re-encoding it as

$$E_{pk_{SV}}\left(g^{ax}\right)^{a^{-1}b} = E_{pk_{SV}}\left(\left(g^{ax}\right)^{a^{-1}b}\right) = E_{pk_{SV}}\left(g^{bx}\right),$$

by virtue of the multiplicative homomorphy of $E_{pk_{SV}}$ (step 2000);

3. The client 100 prepares the evaluation key, i.e., the respective lookup-tables under his own public key $pk_{CL}$, which in particular assures that all internal intermediate results obtained over the execution of P will be encrypted under the client's 100 public key (step 3000). This assures that only the client 100 but not the execution entity 200 or software vendor 350 can access the secret data 102; and

4. Using b the client 100 can encode and submit its data to the execution entity 200 for processing (step 4000). The results are encrypted under $pk_{CL}$ and hence only accessible to the client 100 afterwards.

It is obvious that the scheme becomes insecure if two out of three of these entities 100, 200, 300 collaborate in a hostile fashion. In either case, the secret encoding and in turn the secret data could be disclosed.

Below, an enhanced embodiment enabling improved security will be discussed. Observe that the encryption wrapped around the values considered in the following can be neglected in the case where the attacker is an insider, i.e. the client 100, the execution environment 200 or an external person in the middle intruder.

Precluding collaborations between parties, the attacker can either be the client 100, the execution environment 200 or an external eavesdropper. Consequently, it is necessary to analyze security in each case separately.

The above discussed scenario of using three separate parties is essentially trivial, as the client 100 gets only his personal license b, but cannot access the encrypted quantity $a^{-1}b$ mod $|{<}g{>}|$ that is sent directly to the execution environment 200. As b is chosen stochastically independent of $a$, it does not provide any information about $a$.

Under a slight modification by sending $g^b$ instead of b in this scenario, it is even allowed for an attacker to mount a person-in-the-middle attack, in the course of which he gets $a^{-1}b$ and $g^b$ in plain text. The following result asserts security even under this modified stronger setting.

Security against external adversaries: Let $a \in N$ be the secret license used by the software vendor, and let $I = (a^{-1}b$ mod $|{<}g{>}|, g^b)$ be the attacker's information. Computing a from I is at least as hard as computing discrete logarithms.

Let $A$ be an algorithm that extracts $a$ from $I = (a^{-1}b$ mod $|{<}g{>}|, g^b)$. Another algorithm $A'$ computes discrete logarithms and takes only negligibly more time for this than $A$ needs. Given a value $y$, algorithm A' simply submits the pair $(z, y)$ to $A$, where z is a uniformly random number. As b is uniquely determined by $y = g^x$, there is another unique number $z'$ that satisfies $z = z' \cdot x$, where z' is stochastically independent of x. Hence, the pair $(z, y)$ has the proper distribution to act as input to A, and $A$ then correctly returns the sought discrete logarithm x.

By symmetry, security against a malicious execution environment execution entity holds by the same line of arguments, and under both, the modified and original licensing scenario. The problem for a malicious execution entity is to compute the client's license b from its information $I = (a^{-1}b$ mod $|{<}g{>}|, g^{by})$, which is even harder as before, as there is another stochastically independent quantity y that blinds b in that case.

Security against malicious execution entity: Let $b \in N$ be the secret license of the client, and let $I = (a^{-1}b$ mod $|{<}g{>}|, g^{yb})$ be the attacker's information. Computing b from $I$ is at least as hard as computing discrete logarithms.

After discussing the embodiment according to the first scenario in which all three entities 100, 200, 300 are separated, a further embodiment of the scenario in which the execution entity 200 and the software vendor 350 are combined will be discussed.

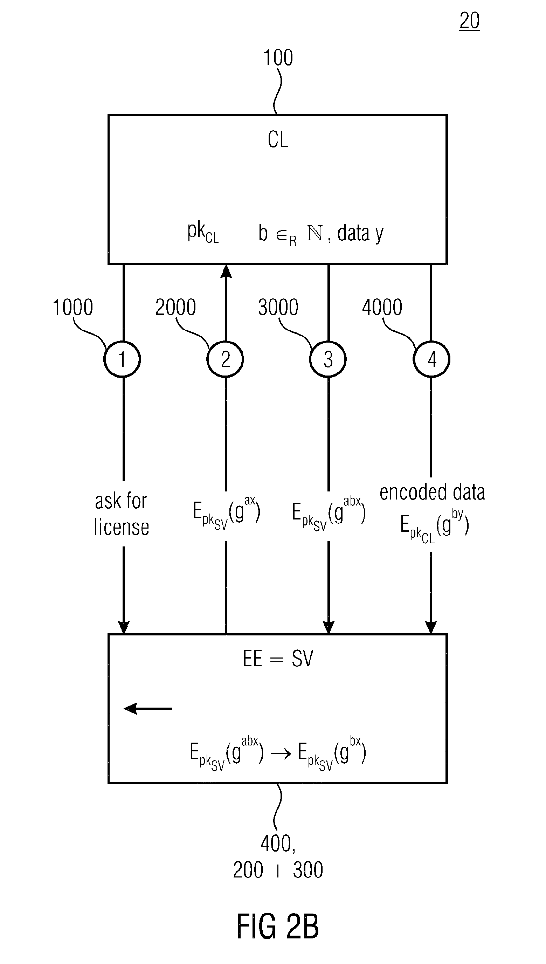

Fig. 2b shows a structure 20 comprising the client 100 and a second entity 400 which comprises the execution entity 200 and the licensing/encoding protocol 300. An example instantiation of this setting would be cloud SaaS (Software as a Service), such as Google Docs. Here, the client obtains a license to use a particular software, but seeks to protect his data from the eyes of the (cloud) provider.

In detail, the execution entity-software vendor-combination 400 knows the encoding $a$ but the client 100 can interactively change it into own chosen encoding b to obtain a license. For details, the remaining steps comprising the execution of the program code P, which is then compatible with a secret encoding b under which the data 102 has been prepared, are substantially equal to the steps 1000 to 4000 discussed with respect to Fig. 2a. For personalization, the software vendor/execution entity 400 decrypts and submits all code items $E_{pkSV}(g^{ax})$ to the client 100 for re-encoding. Note that the client 100 cannot run the program, as it lacks the code itself (the client 100 only gets the constants found in the code).

Below, an enhanced embodiment enabling an improved security will be discussed. Here, the problem is to extract b from ($g^{ax}$, $g^{abx}$, $g^{by}$). Given that the software vendor 350 is identical to the execution environment 200, it can be assumed the attacker knows the values x and $a$, so that the actual problem is to compute b from $I = (g^b, g^{by})$.

Security in case of malicious software vendor, being identical to the execution entity: For example, let $p, q$ be primes so that p = 2q+1 and let $g$ generate a $q$-order subgroup of $\mathbb{Z}_p$, according to another embodiment an elliptic curve group. Computing the client's secret b from $I = (g^b, g^{by})$ is at least as hard as computing discrete logarithms in the subgroup $\langle g \rangle \subsetneq \mathbb{Z}_p$.

The argument is again a reduction: *let A be an algorithm that correctly returns b upon input $I = (g^b, g^{by})$*. An algorithm *A* computes discrete logarithms as follows: given a value *y*, submitting the input (*y, z*) to *A*, where *z* is a random value. As $y = g^x$ uniquely defines a value *x*, it also uniquely defines a value *z'* so that $z = g^{xz'}$. To see this, observe that the solvability of equation $g^{by} = z$, by taking discrete logarithms on both sides, is equivalent to the solvability of *by* = $\text{dlog}_g z$ in the subgroup generated by g, which is trivial. Hence, (*y, z*) has the proper input-distribution for *A*, which then correctly returns the discrete logarithm *x* of $y = g^x$.

Working in groups or subgroups is not explicitly required in the previous security proofs, yet is a standard requirement in secure instantiations of ElGamal encryptions, such as over elliptic curves. Here, it should be noted that the group (g) is not limited to be an elliptic curve group, but may also be a residue class group or another cyclic finite group.

A further embodiment provides the scenario in which the client 100 is housed together with the software vendor 350. For example, the client 100 is the one to provide the code for data analysis, yet seeks to outsource the computation to an external entity 200, e.g. a cloud provider. This case is even more trivial, as the client 100, being the software vendor 350 at the same time, simply chooses the encoding a and submits its code and data to the execution entity 200 for processing. No change or interactive negotiation of the encoding is required here.

The security of this embodiment may be improved according to a further embodiment. Here, the problem is for the execution entity 200 to extract information from the data 102 submitted by the client 100. This is equivalent to either breaking the cipher or computer discrete logarithms, and hence covered by known security proofs concerning the underlying cryptographic concepts.

According to a further embodiment, a different end user may be involved. For example, if the client 100 is not the ultimate party to use the results, then it is straightforward to prepare the evaluation key 302c for a fourth party end user. The change is simply by preparing the evaluation key 302c under the end user's public key $pk_{EU}$ instead of $pk_{CL}$ (cf. below discussed concept of blind Turing-machine). With this modification, all of the above scenarios work exactly as described with respect to Fig. 2a.

All of the above discussed embodiments are based on the teachings of a blind Turing-machine, wherein the concrete implementation uses conventional assembler code. Therefore, with respect to Figs. 3a to 3c the concept of blind Turing-machines will be discussed. The principle of the blind Turing-machine will be discussed within the context of a data processing structure similar to the structure of Fig. 1.

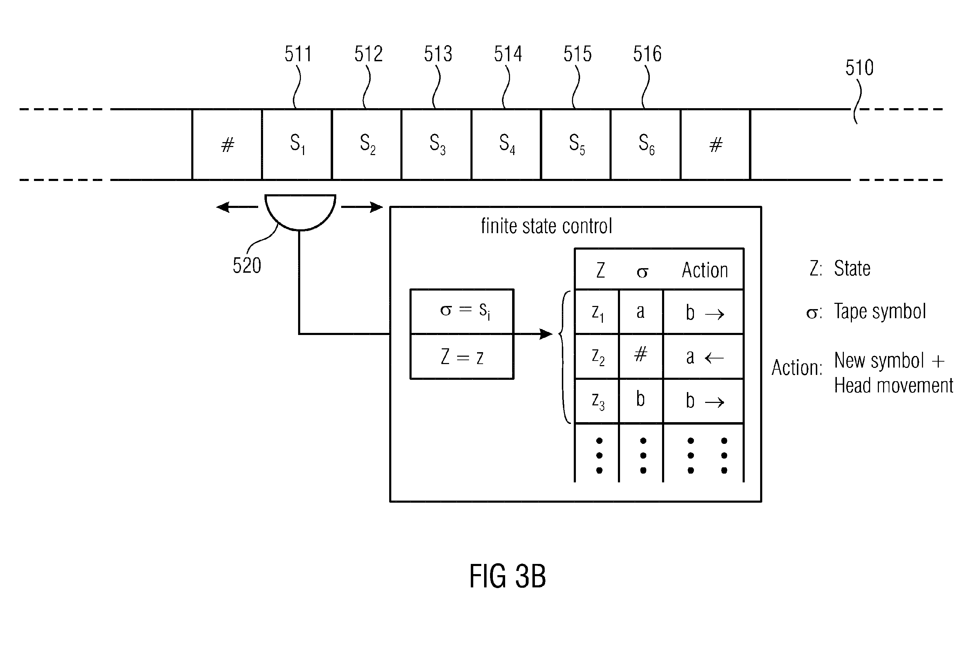

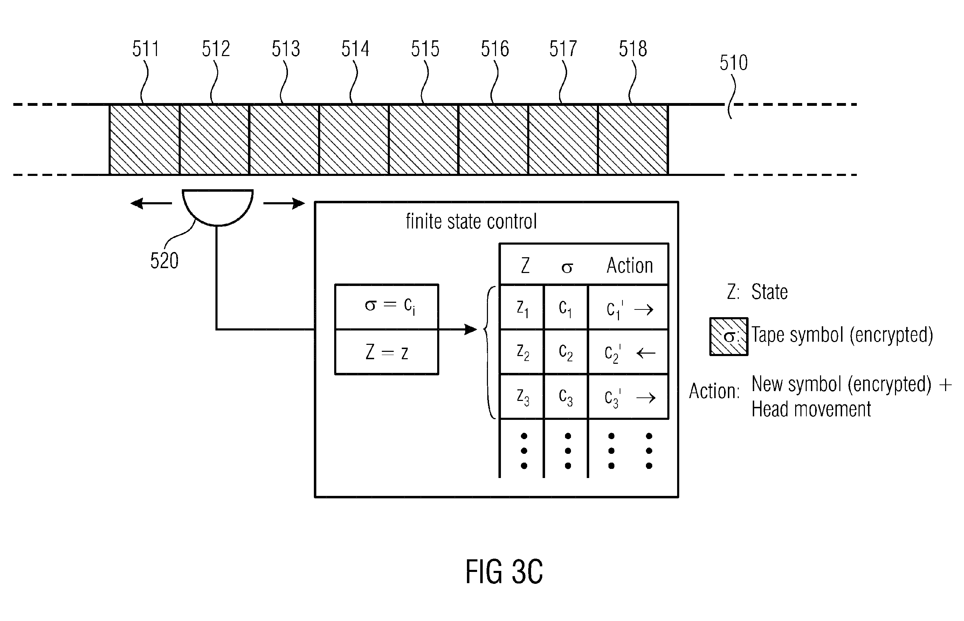

The blind Turing-machine is a hypothetical apparatus that has an infinitely long tape, which stores the data for processing, as illustrated by Figs. 3b and 3c. Figs. 3b and 3c show a tape 510 to be wrapped or to be manipulated using a head 520. The tape comprises an infinite plurality of segments 511 to 516 (here illustrated by six segments, but typically not limited) which comprise content in plain text (cf. Fig. 3b) or encrypted content (Fig. 3c). The processing of the tape is done using the read-write-head 520 that moves over the tape 510, reads the symbols (denoted as $\sigma \in \Sigma$, where $\Sigma$ is a finite alphabet) and optionally replaces them by other symbols, depending on a finite state control (encoding the software). The processing of the singular segments 511 to 516 of the infinite plurality of the segments is done in series, thus with a limited knowledge of the content of other segments 511-516. The basic action of a Turing-machine can therefore be summarized by two steps that are repeated until the computation ends:

1. Read the current symbol $\sigma$ on the tape; and

2. Depending on the current state $z$ (of the limited possible states) and the current symbol $\sigma$, find the replacement symbol $\sigma'$. and determine the direction where to read the next symbol. Note that it is explicitly allowed $\sigma = \sigma'$ (i.e., no change on the tape), and the direction is one of $\{L, R, \perp\}$, indicating a move to the left $(L)$, right (R), or to remain the current position $(\perp)$.

A blind Turing-machine does nothing else than resembling these actions on a tape that contains only encrypted rather than plaintext symbols. The intuition is the following:

1. Manipulating an encrypted symbol on the tape can be done using homomorphic properties of an encryption scheme. Note that for that matter, a single such operation suffices, hence it is possible to work with plain RSA or ElGamal (actually the latter will be the preferred choice in practical settings, for reasons that follow below);

2. Finding the replacement symbol $\sigma'$ and direction of the next move requires a mean to "compare" encrypted symbols using ciphertexts only. This is easy by a generic extension to the encryption function; and

3. Moving on the tape is trivial, regardless of whether or not the tape content is encrypted.

Note that a replacement of $\sigma$ by $\sigma'$ is in any way possible even without using homomorphic manipulations (simply take the new symbol from a lookup table). However, using a homomorphic probabilistic encryption that is semantically secure, a re-randomization in each step can be enforced, thus make even identical symbols look indistinguishable on the tape over the entire computation. For that reason, the example choice will be ElGamal encryption, whose encryption function is

$$E(m, pk) = (g^y, pk^y \cdot m) = (c_1, c_2),$$

where g generates a subgroup of a larger finite group. The public-key is $pk = g^x$ for the secret key being $x \in \mathbb{N}$.

The decryption is by recovering the value $pk^y = (g^y)^x = c_1^{sk}$, and stripping the blinding $pk^y$ from $c_2$ to recover the message $m = c_2 \cdot c_1^{-sk}$.

Let x be the plaintext and let $E$ be any encryption function. An encryption with plaintext equality check is constructed as follows: choose two keys $k_1, k_2$, and encrypt x as

$$c = ( E (x, k_1), E (g^x, k_2)),$$

where $g^x$ is a conventional discrete-logarithm commitment of x in the underlying group of the encryption scheme. The decryption is by deciphering $E(x, k_1)$ under the appropriate decryption key (note that $E$ can be symmetric or public-key for this to work).

To compare to ciphertexts, one needs the decryption key belonging to $k_2$ (say $k_2$ itself if $E$ is symmetric, or the respective secret key if $E$ is asymmetric). Given two ciphertexts $c_1 = (E (x, k_1), E (g^x, k_2)$ and $c_2 = (E (y, k_1'), E(g^y, k_2'),,$ for unknown plaintexts $x, y,$ one obtains the respective decryption keys to decrypt and compare the commitments for equality $g^x = g^y$.

As the exponentiation in the base $g$ being a generating element of the subgroup is injective, equality of the above commitments implies equality of plaintexts.

While probabilistic encryption in general prevents equal plaintexts from resulting in equal ciphertexts, the generic extension can become insecure if the plaintext space is sufficiently small to allow searching it. For example, if the Turing-machine operates on single bits, then only x = 0 and x = 1 are possible tape symbols, enabling a simple attack: the adversary may encrypt both plaintexts under the known public keys, and do a comparison to the given ciphertext with unknown content. The match will then uniquely indicate the hidden plaintext, without any need for decryption keys.

To mitigate this problem, plaintext space may be made unknown to the adversary, which is easy if the known symbols are encoded by another set of unknown symbols. Giving a concrete example, let us encode 0 and 1 in $(g)$ by randomly chosen representatives (as indicated by $\in_R$), say

$$0 \mapsto a_1 \in_R \{0, 1, \dots, |\langle g \rangle| - 1\},$$

$$1 \mapsto a_2 \in_R \{0, 1, \dots, |\langle g \rangle| - 1\},$$

subject to the only constraint that $a_1$ and $a_2$ are distinct. Now, the trial encryption attack from above will no longer work, as the attacker would need to guess $a_1$, $a_2$ from $\{0, 1, \dots, |\langle g \rangle| - 1\}$,

which is negligibly likely if the order of g is sufficiently large, having its magnitude depend on a security parameter $t \in \mathbb{N}$, e.g., t may specify the bitsize of g, or similar.

Practically, $t$ will therefore be the security parameter used to set up the encryption scheme $E$, which will in addition determine the group (g) from which the secret is encoded. More precisely, if the plaintext space (symbol on the Turing tape) is $\{0, 1, \dots, n\}$, then encoding it via random samples $\{a_0, \dots, a_n\}$, each of which is distinct from the others and drawn uniformly at random, denoted as $\in_R$.

Fig. 3a shows a structure having two clients 100a and 100b as well as an execution entity 200, e.g., a cloud provider (CP). Note that the client 100a illustrating the client having the data 102 to be processed and the client 100b illustrating the client getting the processed data 102" may be the same entity. The client 100a comprises an encoding entity 114a and an encryption entity 115a, wherein the encoding entity 114a is configured to encode the data 102 using the code 302a. The encryption entity 115a is configured to encrypt the encoded data 101' of the encoding entity 114a using the public key $pk_{CL}$ or the key of the end-user for the data. The client 100b comprises the decode entity 114b and the decrypt entity 115b. The decrypt entity 115b decrypts the data 102" using the secret key $sk_{CL}$ (counterpart of the public key $pk_{CL}$). The decode entity 114b is configured to decode the encrypted data received from the decrypt entity using the code 302a and to output a decrypted and decoded version of the data 102" as a result.

Between the two clients 100a and 100b the execution environment 200 is arranged. The execution environment 200 comprises an execution processor 205 and a decryption entity 203. The decryption entity receives from the licensing/encoding protocol 300 a decrypted version of the evaluation key 302b, which is encrypted by using the public key $pk_{EE}$. The decryption entity 203 decrypts the evaluation key 302b using the secret key $sk_{EE}$ and provides the decrypted key 302b to the execution processor 205. The execution processor 205, using a program code adapted by the licensing/encoding protocol 300, receives the encoded and encrypted data 102' from 100a, processes the data 102' based on the principle of the blind Turing-machine and outputs the processed, encrypted and encoded data 102" to the client 100b. Such Turing-machines or blind Turing-machines enable to process encrypted data on the flow.

Starting from this theoretical model of the blind Turing-machine processing of the encrypted assembler code is enabled, as will be discussed below.

The Turing-machine model is merely theoretic, but can easily be transferred to the more practical setting of standard assembly language. The trick is again to use lookup tables to run instructions like additions, memory access, or similar. The teachings thereof will briefly be described using a pseudo-code assembler for clarity:

Generally, a distinction is made between several classes of assembler instructions:

Arithmetic and Logical Instructions: these would be additions, multiplications, divisions, bitwise Boolean operations, shifts, etc.

Taking an addition as example, any such instruction of the form
add D, S, R,

with the semantics that $D \leftarrow S+R$ can be modeled using a lookup-table that is accessed with (S, $R$) to retrieve the sum S+R. The lookup-table may be merely a hash-table with key *(S, R)* being encrypted plaintexts, and the necessary comparisons can be done using the generic extension to the encryption as described above.

The content retrieved from the lookup table is simply the encrypted result of the arithmetic operation, say $E(S + R, pk)$, in case of public-key encryption.

Memory access would comprise load and store operations. In general, denoting the memory access to cell i as an array element $M[i]$, the general form of such an instruction would be
store/load D, i,

with the semantics that either $M[i] \leftarrow D$ (store) or $D \leftarrow M[i]$ (load). The value $i$ can be a register (direct addressing) or - in case of indirect addressing - be computed from an offset and an address given by a register. The latter case simply adds an addition operation to compute the final address i (which works as sketched above), but the general memory access to cell i can be done by taking the encrypted commitment $g^i$ as the (unique) memory cell where a data item (ciphertext) shall be stored or retrieved from. Observe that all registers in that case would only contain ciphertexts, whereas memory addressing is via commitments (this adds a natural "scrambling" of the memory access pattern as a convenient side-effect).

Control flow operations: Those would be unconditional, conditional and subroutine jumps. These are again trivial to implement, provided that the jump target refers to a known address in the code. Here, it is the only limitation that the jump target must not be an encrypted value (as it cannot be decrypted to locate the destination), which technically deviates from the classical von Neumann computer architecture, and enforces a Harvard architecture.

Note that using lookup-tables to execute assembly instructions naturally limits the method to work on small alphabets only; typically, it is enabled processing chunks of 4 or less bits per instruction. This is due to the lookup-tables growing exponentially is size with the number of bits: for $k$ bits, it results $2^k \times 2^k = 2^{2k}$ entries, each of which is (generally) two ciphertexts (which comes to $2^{2k} \times 2$ KB for the evaluation key for an example embodiment using 2048 bit blocks for asymmetric encryption, when k bit blocks shall be processed. For 4 bits, this gives roughly 16 KB per assembly operation, which is entirely feasible by nowadays standards). In either case, it is a simple matter to emulate larger register sizes (32 bits or 64 bits) on an algorithmic level. The details are omitted.

However, it is important to note that working with such small plaintext sets substantiates the need for the aforementioned secret encoding, which is besides the defining and adapting of the used coding one of the main subject of this patent. This encoding is to be applied before the encryption and refers to the data and the program code. Hence, data is compatible with the processing algorithm if and only if both use the same encoding.

Note that a computer follows a Harvard architecture has logically and physically separated memories for the code and the data. This is preferred for the architecture, as memory cell $i$ in the plain (non-encrypted) assembly code is addressed via the commitment $g^i$, which inherently scatters the cells over the available memory (and induces a "nonlinear" usage of memory). Since the commitment maps into an element of a group $(g)$, the use of conventional (non-cryptographic) hash-tables to map the commitment $g^i \in (g)$ to a physical memory cell integer address is required.

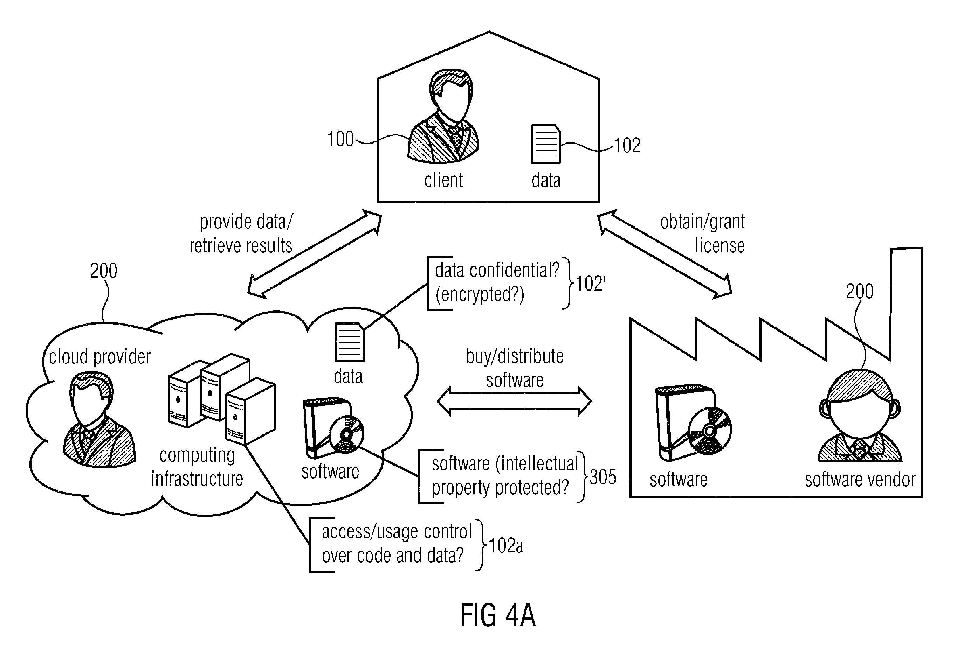

Fig. 4a shows an application of the scenario of Fig. 1 and Fig. 2a for illustrating the industrial application and the advantages provided by the above discussed concept. Here, the client 100 hands over its data 102 to a cloud provider 200 which runs a third party software 310 for data processing services. Security issues 102a, 305, 102' are marked within Fig. 4a.

The client 100 and the software vendor 200 especially have different interests, which may comprise the following: the client 100 wants to keep its data 102 confidential and wants to keep control over how and where it is processed. The software vendor 200 wants to prevent stealth of its computer program 310 or other misuse of its software 310 by unauthorized parties.

The execution environment 200 can be seen as the attacker in the setting: it is the only party that has access to both the data 102 and the algorithms to process it. Therefore, its main interest would be gaining access to the data, or run the program on data of its own supply. As discussed above, the technique is based on the two basic steps, namely encrypting a software in a way so that only licensed copies of it can be run on input data and encrypting data in a way to bind its use to a single licensed copy of a software (so that data processing by unauthorized parties is cryptographically prevented). Transferring this to steps in the example of Fig. 4a, e.g. in the case of cloud services for data processing: consider an online service that offers data processing over a web-interface, using software that runs remotely within the cloud 200. The client 100 could safely input its data 100 through the web-interface, knowing that the cloud 200 is unable to execute the program 310 for which the client 100 has obtained a license on other data than that what comes from the client 100. In addition, the client 100 can be sure that the cloud service provider 200 does not learn any of the secret information that the customer submits for processing.

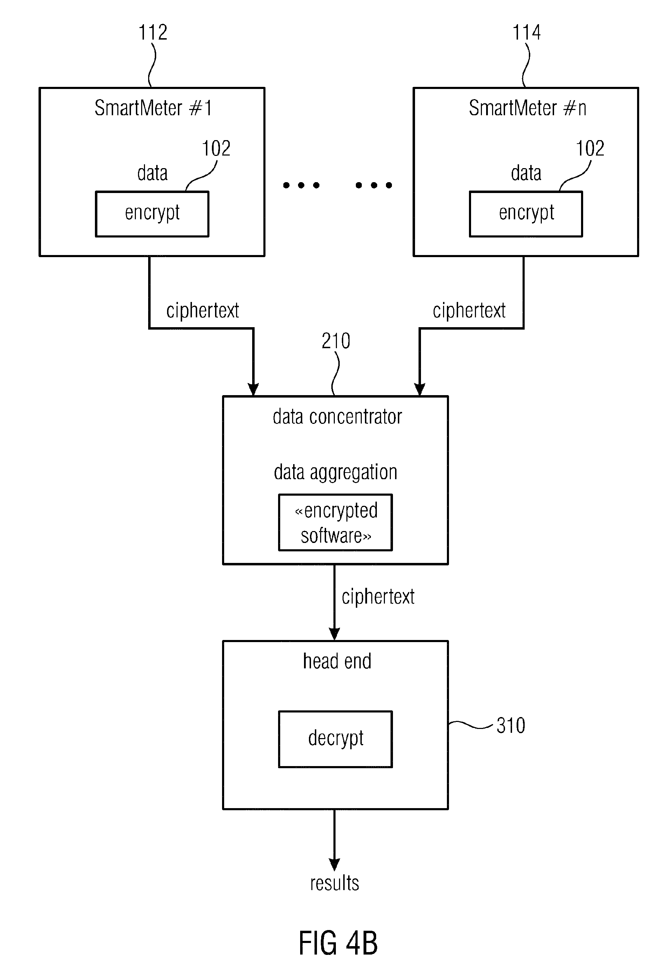

Below, further applications regarding sensor networks and the smart metering infrastructures used for decentralized data processing facilities will be discussed. Fig. 4b shows a smart metering network comprising a first smart meter 112 and a second smart meter 114, wherein the number of smart meters is not limited to two (i.e. preferably more than two). Each smart meter 112 and 114 is connected to a data processor 210, for example a data processor which is vice versa connected to a head end 310.

The smart meters 112 and 114 comply with the first entity 100 of the embodiment of Fig. 1. Thus, each smart meter 112 and 114 comprises data 102 (e.g. regarding an energy consumption or in general billing data) which should be transmitted in an encrypted manner. The data processor 210 complies with the execution entity 200 of the embodiment of Fig. 1 and comprises a program code, which is here a program code performing a data aggregation. The head end 310 is comparable to the licensing/encoding protocol 300 of the embodiment of Fig. 1 and also represents the source of the data. Optionally the head end 310 may comprise a decrypt entity configured to decrypt the encrypted data of the smart meter sensors 112 and/or 114. This is enabled since the head end 310 knows the key used for encrypting the data within the smart meter entities 112 and 114. A further key has been provided to the data processor 210, where the software has been encrypted in order to enable same to process the encrypted data of the smart meter sensors 112 and 114.

Such a structure enables that each smart meter sensor 112 and 114 encrypts the sensor data for the head end 310, and sends it to the data processor 210, as in most standard implementations of smart meter networks. The data processor 210 uses blind Turing-machines mechanism to aggregate and compile the data of the at least two smart meters 112 and 114 for the head end system, while the data remains in fully encrypted form over the entire process. This has the advantage that the information/data within the data processor 210 releases no information about the individual data 102 of the smart meters 112 or 114. Further, the firmware of the data processor 210 is compatible only with the data that comes from authorized meters 112 and 114, so no input of the external information or data is possible by construction. As a result, the head end 310 gets all data of the smart meters 112 and 114 and is able to decrypt same. Although the above embodiment has been discussed in the context of a data processor 210 configured to perform a data aggregation of a smart meter data 102, it should be noted that also other operations and/or processing data of other devices may be possible.

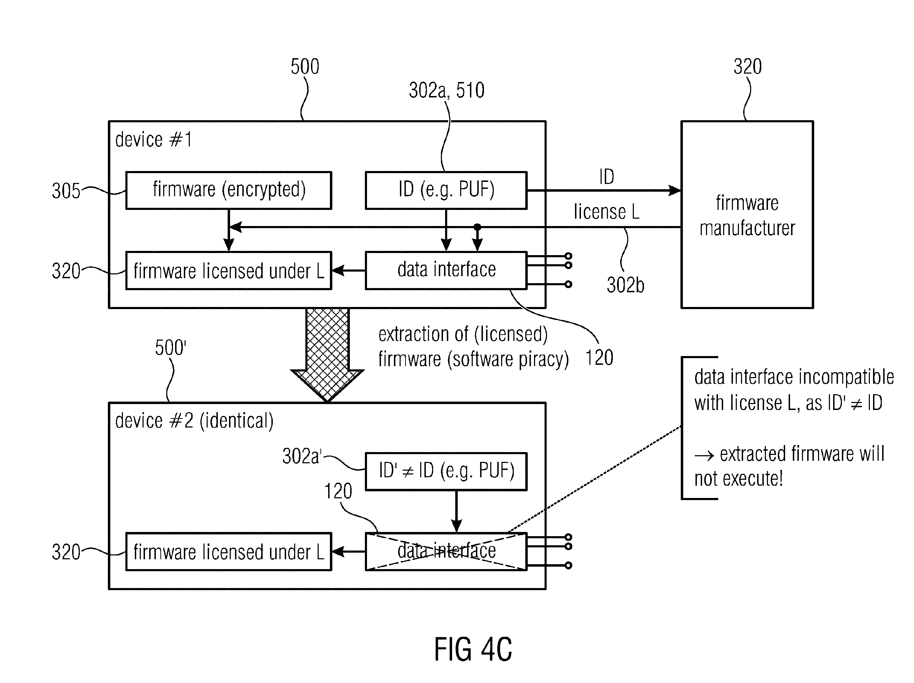

Fig. 4c shows another application of the above described concept in the fields of firmware licensing for electronic control units, each control unit having an individual identification number. Fig. 4c shows a firmware manufacturer 320, a device 500 comprising the data processor (execution entity) 220 comprising the firmware 305 as a licensed version and a data interface 120 complying with the first entity of the above discussed embodiments. The data interface 120 has the purpose to receive data, e.g. sensor data from externally, and to provide the data to the processing unit 320. Here, the provided data is encoded using the first key 302a which is in this embodiment dependent on an identification number, e.g. the ID of the device 500, stored in the memory 510, e.g. as a physical unclonable feature (PUF).

The firmware 305 is loaded into the device 500 by the manufacturer 320, which complies with the software vendor and/or the licensing/encoding protocol of the above discussed embodiments. The execution of the firmware 305 requires a license L that only the manufacturer 320 can deliver, since the license L (equivalent to the key 302b) is to equalize the encoding of externally or internally provided input data and the encoding of the software/firmware 305 to process the data. Thus, this concept provides a personalized firmware using the license L 302b which is directly assigned to the ID via the first key 302a. Therefore, the firmware manufacturer 320 outputs the license L 302b based on the knowledge of the ID (equivalent to the key 302a) of the device 500. Selling the device 500 from the manufacturing surplus on some black market is possible, yet not successful, as the internal firmware cannot be used without the license L to properly encode input data for processing. The firmware 305 in its non-activated form uses an unknown encoding, to which no compatible data can be produced without any license. Changes or updates to the firmware 305 do not require any license, and can be reactivated using an existing license. The manufacturer 320 has, however, the option to provide a new version under a new encoding, which in turn requires a new license L 302b for its activation.

Coming back to the notation of the embodiment illustrated by Fig. 2a, this means for the embodiment of Fig. 4c the following: As before, let the firmware be code with encrypted fragments of the form

$$E_{pk_{SV}}(g^{ax}),$$

under a secret encoding $a \in \mathbb{N}$ used by the software vendor, which is unknown to client.

After uploading the firmware, the device manufacturer obtains a license by

1. choosing a secret value β and submitting the blinded identity β · *ID* to software vendor; and

2. retrieving the license $L' = (g^{b \cdot ID \cdot \beta}, a^{-1} \cdot b \cdot (ID^2) \cdot \beta^2)$ from the firmware manufacturer, where $b \in \mathbb{N}$ is a secret random value chosen by the software vendor. The device manufacturer then strips the factors β, resp. β², from the contents of L' to obtain the final license $= (\ell_1, \ell_2) = (g^{b \cdot ID}, a^{-1} \cdot b \cdot (ID^2))$.

Note that blinding β is only required to avoid attackers listening on the channel in an attempt to clone an identity and hence a device, runnable with the same license as for the honest manufacturer. Using β, the license *L* cannot be obtained from *L'* unless by the device manufacturer (or the device itself), knowing β.

Using the license L, the client can personalize the code via

$$\left(E_{pk_{SV}}(g^{ax})\right)^{\ell_1} = \left(E_{pk_{SV}}(g^{ax})\right)^{a^{-1}bID^2} = E_{pk_{SV}}(g^{b \cdot ID^2 \cdot x}),$$

and can encode input data *y* accordingly by computing

$$\ell_2^{y \cdot ID} = \left(g^{b \cdot ID}\right)^{y \cdot ID} = g^{b \cdot ID^2 \cdot y}$$

.

We stress that an extracted firmware (e.g., software piracy) will not run on a structurally identical hardware, as the other device works with a different $ID' \neq ID$, even if the same license $L = (\ell_1, \ell_2)$ is brought into the device!

To see this, observe that the encoding is actually $b \cdot ID^2$, yet the encoding information for the data is only $g^{b \cdot ID}$, which enforces an exponentiation with the externally supplied identity (e.g., PUF-value) ID. Hence, the encoding by above formula will fail to reproduce $ID^2$ in the exponent, as ID cannot be replaced in the second device (as coming from a PUF for example). The exponent, in that case, will take the form $g^{b \cdot ID \cdot ID' \cdot y}$, which is incompatible with the program encoded via $g^{b \cdot ID^2}$.

Here, the advantages are that it is sufficient that the firmware is encrypted only once identical copies of it can be distributed in the devices 500. Further, regarding the license acquisition, it should be noted that the device identity, e.g. a physical unclonable feature, can be submitted to the manufacturer 320 in concealed form. Using the device ID 302a, the manufacturer 320 can create and return a license L 302b to activate the firmware 305. The use of the PUFs physically presents using one license with different yet identical copies of the device 500. By using encrypted code whose executability rests on secret encodings of the input data, there is no way to deactivate the licensing mechanism or otherwise modify (hack) the code to work without the license L. Under the assumption that the physical device ID cannot be cloned, stolen firmware will not work on any other than the original device 500. This is because the firmware's encoding and the encoding of external inputs through devices' interfaces depend on the physical device ID being equalized using a license L by the manufacturer 320. This situation is illustrated by the second device 500' having a different ID 302a'. Thus, one license cannot be used for two devices 500 and 500'.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an execution entity PROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1. A first entity (100, 112, 114, 120) of a system (10), the system comprising at least the first entity, an execution entity (200, 210, 220) and a licensing/encoding protocol (300, 320),
   wherein the first entity comprises a data memory, having stored thereon data (102) to be processed, wherein the execution entity comprises a program memory, having stored thereon a program code (305), and is configured for data processing using the program code,
   wherein the first entity is configured to encode the data by a first key (302a) provided by the licensing/encoding protocol (300, 320) to obtain encoded data and to submit the encoded data to the execution entity, and
   wherein the program code of the execution entity is adapted by a second key (302b), provided by the licensing/encoding protocol (300, 320) and associated to the first key, such that, when executing the adapted program code on the execution entity, the encoded data is processed.

2. The first entity according to claim 1, wherein the encoding of the first entity (100, 112, 114, 120) is performed according to a rule described by the formula $y \leftrightarrow g^{by}$, where g is a generator of a cyclic group G=<g>, b the first key (302a) and y the data (102) to be processed.

3. The first entity according to claim 2, wherein the group G comprises a residue class group, an elliptic curve group or another finite cyclic group.

4. The first entity according to claim 2 or 3, wherein the first entity (100, 112, 114, 120) is configured to homomorphically encrypt the encoded data $g^{by}$ using a public key $pk_{FE}$ to obtain homomorphically encrypted and encoded data $E(g^{by}, pk_{FE})$.

5. The first entity according to one of the claims 1-4, wherein the first entity (100, 112, 114, 120) is a client machine comprising sensitive data (102) to be processed, wherein the execution entity (200, 210, 220) is an execution server comprising the program code (305) of at least one application, and
   wherein the client machine and the execution entity (200, 210, 220) are connected to each other via a network.

6. The first entity according to one of the claims 1-5, wherein the first entity (100, 112, 114, 120) is a smart metering sensor outputting sensitive data, wherein the execution entity (200, 210, 220) is a data processor configured to process two or more data packets from two or more smart metering sensors to a processed data packet.

7. An execution entity of a system (10), the system comprising at least a first entity (100, 112, 114, 120), the execution entity (200, 210, 220) and a licensing/encoding protocol (300, 320),
   wherein the execution entity (200, 210, 220) comprises a program memory, having stored thereon a program code (305), and is configured for data processing using the program code (305), wherein the first entity (100, 112, 114, 120) comprising a data memory, having stored thereon data (102) to be processed,
   wherein the data (102) to be processed is encoded by the first entity (100, 112, 114, 120) using a first key (302a), which is provided by the licensing/encoding protocol (300, 320), to obtain encoded data,
   wherein the program code (305) of the execution entity (200, 210, 220) is adapted by a second key, provided by the licensing/encoding protocol (300, 320) and associated to the first key (302a), wherein the execution entity (200, 210, 220) is configured to receive the encoded data and to execute the adapted program code (305) in order to process the encoded data.

8. The execution entity according to claim 7, wherein the adapting of the program code (305) is performed according to a rule described by the formula $E(g^{ax}, pk)^{a^{-1}b} = E(g^{axa^{-1}b}, pk) = E(g^{bx}, pk)$ in the group $G$, where g is a generator of the group G, x data (102) to be processed, a is a portion of a counterpart of the second key, and $a^{-1}b$ the second key, wherein the second key (302b) $a^{-1}b$ enables to process data encoded by the first key (302a) b using the program code (305) encoded by the portion of the counterpart a.

9. The execution entity according to claim 8, wherein the program code (305) $g^{ax}$ is encrypted using a public key $pk$ of the first entity (100, 112, 114, 120), of the execution entity (200, 210, 220), of the licensing/encoding protocol (300, 320) or another entity being a destination of the processed data.

10. The execution entity according to one of claims 7 to 9, wherein the execution entity (200, 210, 220) is configured to process the encoded data without decryption of the encoded data and/or wherein the data is encoded using a homomorphic encoding which enables to process data without decoding.

11. The execution entity according to one of claims 7 to 10, wherein the program code (305) is a firmware of an electronic control unit to be processed by the execution entity (200, 210, 220), wherein the first entity (100, 112, 114, 120) comprises a plurality of data sources, wherein the data output by the data sources to the execution entity (200, 210, 220) of the electronic control unit is encoded using the first key (302a) which depends on an identification number of the electrical control unit.

12. A licensing/encoding protocol of a system (10), the system comprising at least a first entity (100, 112, 114, 120), an execution entity (200, 210, 220) and the licensing/encoding protocol (300, 320), wherein the first entity (100, 112, 114, 120) comprises a data memory, having stored thereon data (102) to be processed, wherein the execution entity (200, 210, 220) comprises a program memory, having stored thereon a program code (305), and is configured for data processing using the program code (305), wherein the licensing/encoding protocol (300, 320) provides a first key (302a) to the first entity (100, 112, 114, 120), which is used by the first entity to encode the data (102) to be processed to obtain encoded data, and a second key, which is associated to the first key (302a) and is used to adapt the program code (305) of the execution entity (200, 210, 220) such that the execution entity (200, 210, 220) executes the adapted program code (305) in order to process the encoded data.

13. The licensing/encoding protocol according to claim 12, wherein the licensing/encoding protocol (300, 320) is configured to transmit the first key (302a) b to the first entity (100, 112, 114, 120) on request of the first entity and to transmit the second key $a^{-1}b$ mod $|<g>|$ to the execution entity (200, 210, 220) on the request of the first entity.

14. A system (10) comprising the first entity, the execution entity (200, 210, 220) and the licensing/encoding protocol (300, 320) according to one of claims 1 to 13, wherein the first entity (100, 112, 114, 120), the execution entity (200, 210, 220) and an entity executing the licensing/encoding protocol (300, 320) are connected to each other via a network, or wherein the first entity (100, 112, 114, 120) and the execution entity (200, 210, 220) are housed together and are connected to the entity executing the licensing/encoding protocol (300, 320) via the network, or wherein the execution entity (200, 210, 220) and the entity executing the licensing/encoding protocol (300, 320) are housed together and connected to the first entity (100, 112, 114, 120) using the network.

15. A method for processing data using a system (10), the system comprising at least a first entity (100, 112, 114, 120), an execution entity (200, 210, 220) and a licensing/encoding protocol (300, 320), wherein the first entity (100, 112, 114, 120) comprises a data memory, having stored thereon data (102) to be processed, wherein the execution entity (200, 210, 220) comprises a program memory, having stored thereon a program code (305), and is configured for data processing using the program code (305), the method comprises the following steps:

encoding the data, using the first entity (100, 112, 114, 120), by a first key (302a), provided by the licensing/encoding protocol (300, 320), to obtain encoded data; and
submitting the encoded data to the execution entity (200, 210, 220), wherein the program code (305) of the execution entity (200, 210, 220) is adapted by a second key (302b), provided by the licensing/encoding protocol (300, 320) and associated to the first key (302a), such that, when executing the program code (305) on the execution entity (200, 210, 220), the encoded data is processed.

**16.** A method for processing data using a system (10), the system comprising at least a first entity (100, 112, 114, 120), an execution entity (200, 210, 220) and a licensing/encoding protocol (300, 320), wherein the execution entity (200, 210, 220) comprises a program memory, having stored thereon a program code (305), and is configured for data processing using the program code (305), wherein the first entity (100, 112, 114, 120) comprises a data memory, having stored thereon data (102) to be processed, wherein the data (102) to be processed is encoded by the first entity (100, 112, 114, 120) using a first key (302a), which is provided by the licensing/encoding protocol (300, 320), to obtain encoded data, the method comprises the following steps:

adapting the program code (305) of the execution entity (200, 210, 220) by a second key (302b), provided by the licensing/encoding protocol (300, 320) and associated to the first key (302a);
receiving the encoded data; and
executing the adapted program code (305) in order to process the encoded data.

**17.** A method for data processing using a system (10), the system comprising at least a first entity (100, 112, 114, 120), an execution entity (200, 210, 220) and a licensing/encoding protocol (300, 320), wherein the first entity (100, 112, 114, 120) comprises a data memory, having stored thereon data (102) to be processed, wherein the execution entity (200, 210, 220) comprises a program memory, having stored thereon a program code (305), and is configured for data processing using the program code (305), the method comprises the following steps:

providing, using the licensing/encoding protocol (300, 320), a first key (302a) to the first entity (100, 112, 114, 120), which is used by the first entity (100, 112, 114, 120) to encode the data (102) to be processed to obtain encoded data; and
providing a second key (302b) associated to the first key (302a), which is used to adapt the program code (305) of the execution entity (200, 210, 220) such that the execution entity (200, 210, 220) executes the adapted program code (305) in order to processes the encoded data.

**18.** Computer readable digital storage medium having stored thereon a computer program, having a program code for performing, when running on a computer, a method for data processing according to one of the claims 15 to 17.

**Amended claims in accordance with Rule 137(2) EPC.**

**1.** A first entity (100, 112, 114, 120) of a cloud computing system (10, 10'), the cloud computing system comprising at least the first entity, an execution entity (200, 210, 220) and a licensing protocol (300, 320), the execution entity (200, 210, 220) being spaced apart from the first entity (100, 112, 114, 120), the licensing protocol (300, 320) running on a further computing entity; wherein the first entity (100, 112, 114, 120) is a client machine comprising sensitive data (102) to be processed, wherein the execution entity (200, 210, 220) is an execution server comprising the program code (305) of at least one application, and wherein the client machine and the execution entity (200, 210, 220) are connected to each other via a network;
wherein the first entity comprises a data memory, having stored thereon data (102) to be processed, wherein the execution entity comprises a program memory, having stored thereon a program code (305), and is configured for data processing using the program code,
wherein the first entity is configured to encode the data by a first key (302a) provided by the licensing protocol (300, 320) to obtain encoded data and to submit the encoded data to the execution entity, and
wherein the first entity is adapted to the execution entity and to the licensing protocol, wherein the program code of the execution entity is adapted by a second key (302b), provided by the licensing protocol (300, 320) and associated to the first key, such that, when executing the adapted program code on the execution entity, the encoded data is processed.

**2.** The first entity according to claim 1, wherein the encoding of the first entity (100, 112, 114, 120) is performed according to a rule described by the formula $y \mapsto g^{by}$, where g is a generator of a cyclic group G=<g>, b the first key (302a) and y the data (102) to be processed.

**3.** The first entity according to claim 2, wherein the group G comprises a residue class group, an elliptic curve group or another finite cyclic group.

**4.** The first entity according to claim 2 or 3, wherein the first entity (100, 112, 114, 120) is configured to homomorphically encrypt the encoded data $g^{by}$ using a public key $pk_{FE}$ to obtain homomorphically encrypted and encoded data

**14**

$E(g^{by}, pk_{FE})$.

5. The first entity according to one of the claims 1-4, wherein the first entity (100, 112, 114, 120) is a smart metering sensor outputting sensitive data, wherein the execution entity (200, 210, 220) is a data processor configured to process two or more data packets from two or more smart metering sensors to a processed data packet.

6. An execution entity of a cloud computing system (10, 10'), the cloud computing system comprising at least a first entity (100, 112, 114, 120), the execution entity (200, 210, 220) and a licensing protocol (300, 320), the execution entity (200, 210, 220) being spaced apart from the first entity (100, 112, 114, 120), the licensing protocol (300, 320) running on a further computing entity; wherein the first entity (100, 112, 114, 120) is a client machine comprising sensitive data (102) to be processed, wherein the execution entity (200, 210, 220) is an execution server comprising the program code (305) of at least one application, and wherein the client machine and the execution entity (200, 210, 220) are connected to each other via a network;
wherein the execution entity (200, 210, 220) comprises a program memory, having stored thereon a program code (305), and is configured for data processing using the program code (305), wherein the first entity (100, 112, 114, 120) comprising a data memory, having stored thereon data (102) to be processed,
wherein the data (102) to be processed is encoded by the first entity (100, 112, 114, 120) using a first key (302a), which is provided by the licensing protocol (300, 320), to obtain encoded data,
wherein the execution entity is adapted to the first entity and to the licensing protocol, wherein the program code (305) of the execution entity (200, 210, 220) is adapted by a second key, provided by the licensing protocol (300, 320) and associated to the first key (302a), wherein the execution entity (200, 210, 220) is configured to receive the encoded data and to execute the adapted program code (305) in order to process the encoded data.

7. The execution entity according to claim 6, wherein the adapting of the program code (305) is performed according to a rule described by the formula $E(g^{ax}, pk)^{a-1b} = E(g^{axa-1b}, pk) = E(g^{bx}, pk)$ in the group G, where g is a generator of the group G, $x$ data (102) to be processed, a is a portion of a counterpart of the second key, and $a^{-1}b$ the second key, wherein the second key (302b) $a^{-1}b$ enables to process data encoded by the first key (302a) b using the program code (305) encoded by the portion of the counterpart $a$, $pk$ is a public key.

8. The execution entity according to claim 7, wherein the program code (305) $g^{ax}$ is encrypted using a public key $pk$ of the first entity (100, 112, 114, 120), of the execution entity (200, 210, 220), of the licensing protocol (300, 320) or another entity being a destination of the processed data.

9. The execution entity according to one of claims 6 to 8, wherein the execution entity (200, 210, 220) is configured to process the encoded data without decryption of the encoded data and/or wherein the data is encoded using a homomorphic encoding which enables to process data without decoding.

10. The execution entity according to one of claims 6 to 9, wherein the program code (305) is a firmware of an electronic control unit to be processed by the execution entity (200, 210, 220), wherein the first entity (100, 112, 114, 120) comprises a plurality of data sources, wherein the data output by the data sources to the execution entity (200, 210, 220) of the electronic control unit is encoded using the first key (302a) which depends on an identification number of the electrical control unit.

11. A licensing protocol of a cloud computing system (10, 10'), the cloud computing system comprising at least a first entity (100, 112, 114, 120), an execution entity (200, 210, 220) and the licensing protocol (300, 320), the execution entity (200, 210, 220) being spaced apart from the first entity (100, 112, 114, 120), the licensing protocol (300, 320) running on a further computing entity; wherein the first entity (100, 112, 114, 120) is a client machine comprising sensitive data (102) to be processed, wherein the execution entity (200, 210, 220) is an execution server comprising the program code (305) of at least one application, and wherein the client machine and the execution entity (200, 210, 220) are connected to each other via a network;
wherein the licensing protocol is adapted to the execution entity and to the first entity, wherein the first entity (100, 112, 114, 120) comprises a data memory, having stored thereon data (102) to be processed, wherein the execution entity (200, 210, 220) comprises a program memory, having stored thereon a program code (305), and is configured for data processing using the program code (305),
wherein the licensing protocol (300, 320) provides a first key (302a) to the first entity (100, 112, 114, 120), which is used by the first entity to encode the data (102) to be processed to obtain encoded data, and a second key, which is associated to the first key (302a) and is used to adapt the program code (305) of the execution entity (200, 210, 220) such that the execution entity (200, 210, 220) executes the adapted program code (305) in order to process the encoded data.

12. The licensing protocol according to claim 11, wherein the licensing protocol (300, 320) is configured to transmit the first key (302a) b to the first entity (100, 112, 114, 120) on request of the first entity and to transmit the second key $a^{-1}b$ mod $|<g>|$ to the execution entity (200, 210, 220) on the request of the first entity.

13. A cloud computing system (10, 10') comprising the first entity according to one of claims 1 to 6, the execution entity (200, 210, 220) according to one of claims 6 to 10 and the licensing protocol (300, 320) according to one of claims 11 and 12, wherein the first entity (100, 112, 114, 120), the execution entity (200, 210, 220) and an entity executing the licensing protocol (300, 320) are connected to each other via a network, or
wherein the first entity (100, 112, 114, 120) and the execution entity (200, 210, 220) are housed together and are connected to the entity executing the licensing protocol (300, 320) via the network, or
wherein the execution entity (200, 210, 220) and the entity executing the licensing protocol (300, 320) are housed together and connected to the first entity (100, 112, 114, 120) using the network.

14. A method for processing data using a cloud computing system (10, 10'), the cloud computing system comprising at least a first entity (100, 112, 114, 120), an execution entity (200, 210, 220) and a licensing protocol (300, 320), wherein the first entity (100, 112, 114, 120) comprises a data memory, having stored thereon data (102) to be processed, wherein the execution entity (200, 210, 220) comprises a program memory, having stored thereon a program code (305), and is configured for data processing using the program code (305), the execution entity (200, 210, 220) being spaced apart from the first entity (100, 112, 114, 120), the licensing protocol (300, 320) running on a further computing entity; wherein the first entity (100, 112, 114, 120) is a client machine comprising sensitive data (102) to be processed, wherein the execution entity (200, 210, 220) is an execution server comprising the program code (305) of at least one application, and wherein the client machine and the execution entity (200, 210, 220) are connected to each other via a network, the method comprises the following steps:

encoding the data, using the first entity (100, 112, 114, 120), by a first key (302a), provided by the licensing protocol (300, 320), to obtain encoded data; and
submitting the encoded data to the execution entity (200, 210, 220), wherein the program code (305) of the execution entity (200, 210, 220) is adapted by a second key (302b), provided by the licensing protocol (300, 320) and associated to the first key (302a), such that, when executing the program code (305) on the execution entity (200, 210, 220), the encoded data is processed.

15. A method for processing data using a cloud computing system (10, 10'), the cloud computing system comprising at least a first entity (100, 112, 114, 120), an execution entity (200, 210, 220) and a licensing protocol (300, 320), wherein the execution entity (200, 210, 220) comprises a program memory, having stored thereon a program code (305), and is configured for data processing using the program code (305), wherein the first entity (100, 112, 114, 120) comprises a data memory, having stored thereon data (102) to be processed, wherein the data (102) to be processed is encoded by the first entity (100, 112, 114, 120) using a first key (302a), which is provided by the licensing protocol (300, 320), to obtain encoded data, the execution entity (200, 210, 220) being spaced apart from the first entity (100, 112, 114, 120), the licensing protocol (300, 320) running on a further computing entity; wherein the first entity (100, 112, 114, 120) is a client machine comprising sensitive data (102) to be processed, wherein the execution entity (200, 210, 220) is an execution server comprising the program code (305) of at least one application, and wherein the client machine and the execution entity (200, 210, 220) are connected to each other via a network, the method comprises the following steps:

adapting the program code (305) of the execution entity (200, 210, 220) by a second key (302b), provided by the licensing protocol (300, 320) and associated to the first key (302a);
receiving the encoded data; and
executing the adapted program code (305) in order to process the encoded data.

16. A method for data processing using a cloud computing system (10, 10'), the cloud computing system comprising at least a first entity (100, 112, 114, 120), an execution entity (200, 210, 220) and a licensing protocol (300, 320), wherein the first entity (100, 112, 114, 120) comprises a data memory, having stored thereon data (102) to be processed, wherein the execution entity (200, 210, 220) comprises a program memory, having stored thereon a program code (305), and is configured for data processing using the program code (305), the execution entity (200, 210, 220) being spaced apart from the first entity (100, 112, 114, 120), the licensing protocol (300, 320) running on a further computing entity; wherein the first entity (100, 112, 114, 120) is a client machine comprising sensitive data (102) to be processed, wherein the execution entity (200, 210, 220) is an execution server comprising the program code (305) of at least one application, and wherein the client machine and the execution entity (200, 210, 220) are connected to each other via a network, the method comprises the following steps:

> providing, using the licensing protocol (300, 320), a first key (302a) to the first entity (100, 112, 114, 120), which is used by the first entity (100, 112, 114, 120) to encode the data (102) to be processed to obtain encoded data; and providing a second key (302b) associated to the first key (302a), which is used to adapt the program code (305) of the execution entity (200, 210, 220) such that the execution entity (200, 210, 220) executes the adapted program code (305) in order to processes the encoded data.

17. Computer readable digital storage medium having stored thereon a computer program, having a program code for performing, when running on a computer, a method for data processing according to one of the claims 14 to 16.

FIG 1

EP 3 010 172 A1

FIG 2A

20

100

CL

$pk_{CL}$     $b \in_R \mathbb{N}$, data y

1000        2000        3000        4000

①          ②          ③          ④

ask for      $E_{pk_{SV}}(g^{ax})$    $E_{pk_{SV}}(g^{abx})$    encoded data
license                                              $E_{pk_{CL}}(g^{by})$

EE = SV

←

$E_{pk_{SV}}(g^{abx}) \rightarrow E_{pk_{SV}}(g^{bx})$

400,
200 + 300

FIG 2B

FIG 3A

FIG 3B

EP 3 010 172 A1

finite state control

| | $\sigma = c_i$ |
| | $Z = z$ |

| Z | $\sigma$ | Action |
|---|---|---|
| $z_1$ | $c_1$ | $c_1' \rightarrow$ |
| $z_2$ | $c_2$ | $c_2' \leftarrow$ |
| $z_3$ | $c_3$ | $c_3' \rightarrow$ |
| ⋮ | ⋮ | ⋮ |

Z: State

σ: Tape symbol (encrypted)

Action: New symbol (encrypted) + Head movement

FIG 3C

FIG 4A

- provide data/ retrieve results
- obtain/grant license
- 100 client
- 102 data
- 200 cloud provider
- computing infrastructure
- data
- software
- data confidential? (encrypted?) } 102'
- buy/distribute software
- software (intellectual property protected? } 305
- access/usage control over code and data? } 102a
- 200 software vendor
- software

EP 3 010 172 A1

112

114

SmartMeter #1

data 102

encrypt

• • • • • •

SmartMeter #n

data 102

encrypt

ciphertext

ciphertext

210

data concentrator

data aggregation

«encrypted software»

ciphertext

head end

decrypt

310

results

FIG 4B

FIG 4C

EP 3 010 172 A1

Europäisches
Patentamt
European
Patent Office
Office européen
des brevets

# EUROPEAN SEARCH REPORT

**Application Number**

EP 14 18 9234

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Elaine Shi ET AL: "Privacy-Preserving Aggregation of Time-Series Data", Proceedings of the Network and Distributed System Security Symposium (NDSS 2011), 9 May 2011 (2011-05-09), XP55058556, Retrieved from the Internet: URL:http://www.isoc.org/isoc/conferences/ndss/11/pdf/9_3.pdf [retrieved on 2013-04-04] * the whole document * | 1-18 | INV. H04L9/00 |
| X | US 2013/124850 A1 (GOMEZ MARMOL FELIX [ES] ET AL) 16 May 2013 (2013-05-16) * abstract * * paragraphs [0001] - [0041] * | 1,7,12, 14-18 | |
| X | US 208 101 A (UNIVERSIDAD DE MURCIA, NEC EUROPE LTD.) 17 September 1878 (1878-09-17) * abstract * * paragraphs [0022] - [0069] * | 1,7,12, 14-18 | |

**TECHNICAL FIELDS SEARCHED (IPC)**

H04L

The present search report has been drawn up for all claims

| Place of search | Date of completion of the search | Examiner |
|---|---|---|
| Munich | 26 March 2015 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 18 9234

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2015

| Patent document cited in search report | | Publication date | Patent family member(s) | | Publication date |
|---|---|---|---|---|---|
| US 2013124850 | A1 | 16-05-2013 | EP 2540027 A1 | | 02-01-2013 |
| | | | ES 2448806 T3 | | 17-03-2014 |
| | | | JP 5500666 B2 | | 21-05-2014 |
| | | | JP 2013543357 A | | 28-11-2013 |
| | | | US 2013124850 A1 | | 16-05-2013 |
| | | | WO 2012103896 A1 | | 09-08-2012 |
| US 208101 | A | 17-09-1878 | NONE | | |

For more details about this annex : see Official Journal of the European Patent Office, No. 12/82